Europäisches Patentamt

European Patent Office

Office européen des brevets

(19)

(11) **EP 1 052 515 A1**

(12) **EUROPÄISCHE PATENTANMELDUNG**

(43) Veröffentlichungstag:
**15.11.2000 Patentblatt 2000/46**

(51) Int Cl.⁷: **G01P 3/488**, G01D 5/20,
G01D 5/22

(21) Anmeldenummer: **99109417.8**

(22) Anmeldetag: **11.05.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **Relusolver GbR**
**66763 Dillingen (DE)**

(72) Erfinder:
• **Nase, Rainer**
**66280 Sulzbach (DE)**

• **Schikofsky, Robert**
**66121 Saarbrücken (DE)**
• **Wacht, Hans**
**54329 Konz-Könen (DE)**
• **Wacht, Michael**
**54459 Wiltingen (DE)**

(74) Vertreter: **Troesch Scheidegger Werner AG**
**Patentanwälte,**
**Siewerdtstrasse 95,**
**Postfach**
**8050 Zürich (CH)**

(54) **Vorrichtung zur Positions- und/oder Geschwindigkeitsbestimmung und deren Verwendung**

(57) Magnetischer Linear-/Drehgeber, dessen erster Teil (1) zahnförmige Polschuhe (6,7) mit jeweils einer zugeordneten Sensorspule (4,5) sowie mit einer für mehrere Polschuhe gemeinsamen Erregerspule (3) aufweist. Der zweite Teil (2) ist als ebenfalls gezähntes, relativ zum ersten Teil bewegliches Joch ausgebildet. Der Zahnabstand der Zähne (6,7) des ersten Teils ist verschieden vom Zahnabstand der Zähne (2a,b) des zweiten Teils, sodass die gegenseitige Bedeckung verschiedener Zahnpaare (6,2a), (7,2b) phasenverschoben stattfindet.

FIG.1

EP 1 052 515 A1

**Beschreibung**

Die vorliegende Erfindung betrifft eine Vorrichtung nach dem Oberbegriff des Patentanspruchs 1 sowie Verwendungen der Vorrichtung.

Zur Bestimmung von Geschwindigkeit oder Position werden einerseits magnetische anderseits optische Systeme eingesetzt, wobei sich die erst genannten durch eine grosse Robustheit und einen weiten Temperaturbereich auszeichnen. Im Zusammenhang mit rotierenden Systemen werden oft sogenannte Resolver eingesetzt, die auch als Absolutdrehgeber eingesetzt werden.

In EP-0 174 290 ist ein Positions- und Geschwindigkeitsmessgerät beschrieben, das auf elektromagnetischer Basis funktioniert. Das bekannte Gerät weist einen kreisförmigen Stator und einen entsprechenden Rotor auf, wobei sowohl eine Erregerspule als auch mehrere Sensorspulen auf dem Stator vorgesehen sind. Der Rotor besteht im wesentlichen aus einem scheibenförmigen Element aus ferromagnetischem Material, wobei das scheibenförmige Element mit einer auf die Drehachse senkrecht stehenden Ebene einen spitzen Winkel einschliesst, womit in die vier auf dem Stator angeordneten Sensorspulen eine Spannung in Abhängigkeit der Position des scheibenförmigen Elementes induziert wird.

Die bekannte Vorrichtung weist insbesondere den Nachteil auf, dass das Bauvolumen aufgrund des schräggestellten scheibenförmigen Elementes als Rotor eine Grösse erreicht, die zur Folge hat, dass ein Anbau - beispielsweise an ein Elektromotor - in einem separatem Gehäuse erforderlich ist. Damit ist die bekannte Vorrichtung direkt mechanischen Belastungen ausgesetzt und somit relativ störanfällig. Darüber hinaus sind die Kosten für das bekannte System relativ hoch.

Der vorliegenden Erfindung liegt daher die Aufgabe zugrunde, eine Vorrichtung anzugeben, die obenerwähnte Nachteile nicht aufweist.

Diese Aufgabe wird durch die im kennzeichnenden Teil des Patentanspruchs 1 angegebenen Massnahmen gelöst. Vorteilhafte Ausgestaltungen der Erfindung sowie Verwendungen sind in weiteren Ansprüchen angegeben.

Die Erfindung weist folgende Vorteile auf: Indem die Elemente des ersten Teils derart in bezug auf die Elemente des zweiten Teils angeordnet sind, dass die Signale an den Sensorspulen phasenverschoben sind, wobei zugleich der zweite Teil symmetrisch in bezug auf eine senkrecht auf die Elemente des zweiten Teils stehenden Ebene ist, wird ein äusserst kompakte Vorrichtung zur Positions- und/oder Geschwindigkeitsbestimmung erhalten. Die erfindungsgemässe Vorrichtung eignet sich dabei beispielsweise vorzüglich zur Integration in ein Wälzlager. Hierbei ist kein zusätzliches Gehäuse, keine Lagerstelle und kein zusätzlicher Einbauraum erforderlich.

Darüber hinaus eignet sich die erfindungsgemässe Vorrichtung auch vorzüglich zur Bestimmung von Ort und Geschwindigkeit bei linearen Bewegungen.

Die Erfindung wird nachfolgend anhand von Zeichnungen beispielsweise näher erläutert. Dabei zeigen

Fig. 1     einen prinzipiellen Aufbau einer erfindungsgemässen Vorrichtung mit zwei Sensorspulen in perspektivischer Darstellung,

Fig. 2     den Signalverlauf über einer Sensorspule bei Erregung mit Wechselstrom,

Fig. 3     schematisch, eine weitere Ausführungsform der erfindungsgemässen Vorrichtung in Seitenansicht,

Fig. 4     eine kreisförmige Ausführungsform der erfindungsgemässen Vorrichtung gemäss Fig. 1,

Fig. 5     eine kreisförmige Ausführungsform der erfindungsgemässen Vorrichtung gemäss Fig. 3,

Fig. 6     einen Schnitt senkrecht durch zwei Erregerspulen einer erfindungsgemässen Vorrichtung zur Absolutwertbestimmung und

Fig. 7     eine weitere Ausführungsform der erfindungsgemässen Vorrichtung, bei der Erreger- und Sensorspulen zusammen geschaltet sind.

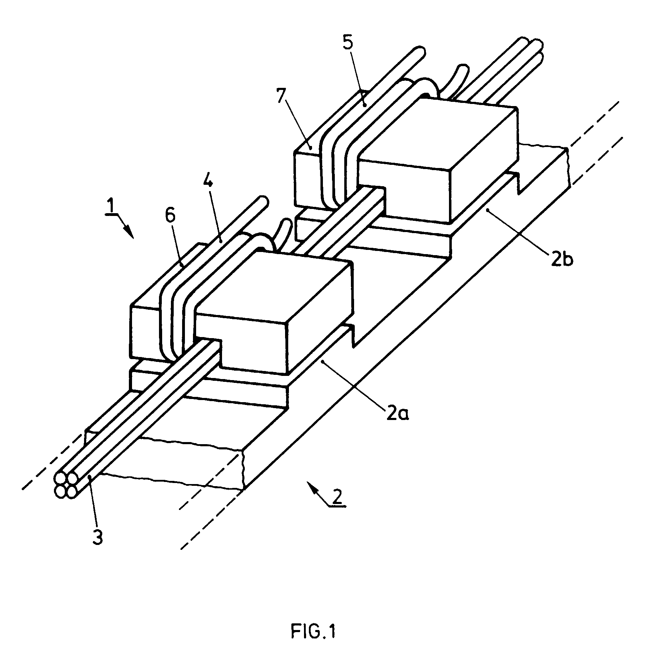

Fig. 1 zeigt in schematischer und perspektivischer Darstellung eine erfindungsgemässe Vorrichtung zur Verwendung bei linearen Bewegungen, bestehend aus einem ersten, beweglichen Teil 1 und einem zweiten, festen Teil 2, wobei zum erstgenannten eine Erregerspule 3, zwei Sensorspulen 4 und 5 sowie zwei U-förmige Elemente 6 und 7 gehören. Die aus vier Windungen bestehende Erregerspule 3 erstreckt sich durch die aus ferromagnetischem Material bestehenden U-förmigen Elemente 6 und 7, wobei ein durch die Erregerspule 3 fliessender Strom zu einem magnetischen Fluss in den U-förmigen Elementen 6 und 7 führt.

Der feste Teil 2 erstreckt sich entlang des beweglichen Teils 1 und besteht aus einem balkenförmigen Trägerelement, auf dem vorzugsweise in regelmässigem Abstand als Zähne ausgebildete Elemente vorgesehen sind, von denen zwei dargestellt und mit 2a und 2b bezeichnet sind. Der feste Teil 2 - oder zumindest dessen Elemente 2a und 2b - sind ebenfalls wie die U-förmigen Elemente 6 und 7 aus ferromagnetischem Material gefertigt.

Der nun durch den Erregerstrom in den U-förmigen Elementen 6 und 7 erzeugte magnetische Fluss induziert in den Sensorspulen 4 und 5 je eine elektrische Spannung, und zwar in Abhängigkeit von der Position des Zahnes 2a bzw. 2b in bezug auf das jeweilige U-förmige Element 6 bzw. 7. Die induzierte Spannung ist an den Anschlüssen der Sensorspule 4 maximal, wenn einer der Zähne des festen Teils 2 mit dem U-förmigen Element 6 deckungsgleich ist, d.h. wenn der magnetische Kreis, bestehend aus U-förmigem Element 6 und einem der Zähne des festen Teils 2, für den durch die Erregerspule 3 erzeugten Fluss bestmöglich geschlossen ist.

Wie bereits erwähnt sind die Zähne bzw. die Elemente des festen Teils 2 in regelmässigem Abstand auf dem balkenförmigen Trägerelement angeordnet. Demgegenüber sind die U-förmigen Elemente 6 und 7 des beweglichen Teils 1 erfindungsgemäss in einem anderen Abstand zueinander angeordnet. Damit ist es aufgrund der an den Sensorspulen 4 und 5 erhaltenen Signalen $U_4$ und $U_5$ möglich, die genaue Position des festen Teils 2 in bezug auf den beweglichen Teil 1 zu bestimmen, denn indem durch den festen Teil 2 der magnetische Gesamtfluss positionsabhängig in die beiden magnetischen Kreise verteilt wird, besitzen die Spannungen $U_4$ und $U_5$ an den Anschlüssen der Sensorspulen 4 und 5 die gewünschte Positionsabhängigkeit.

Bei einer bevorzugten Ausführungsform der erfindungsgemässen Vorrichtung wird der Abstand zwischen den U-förmigen Elementen 6 und 7 derart gewählt, dass bei einer Bewegung des beweglichen Teils 1 zwischen den an den Anschlüssen der Sensorspulen 4 und 5 gemessenen Ausgangssignalen $U_4$ und $U_5$ eine Phasenverschiebung von 90° vorhanden ist. Gemäss Fig. 1 wirkt das Element 6 bzw. 7 zusammen mit dem entsprechenden Element 2a bzw. 2b, wobei die Elemente 2a und 2b benachbart sind. In einer weiteren Ausführungsform der Erfindung ist vorgesehen, dass weitere Elemente bzw. Zähne zwischen den für die magnetische Kopplung massgebenden Elementen 2a und 2b vorhanden sind. Voraussetzung ist, dass die Elemente auf dem Trägerelemente regelmässig angeordnet sind.

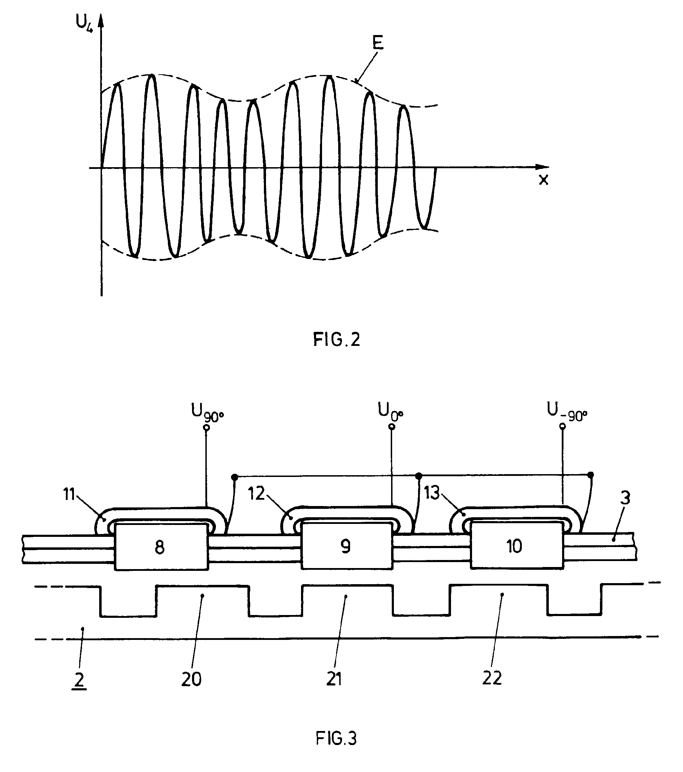

Um eine ständige Veränderung des magnetischen Flusses zu erhalten, wird vorzugsweise ein Wechselstrom in der Erregerspule 3 erzeugt. Bei einer solchen Erregung kann an der Sensorspule 4 die Spannung $U_4$ gemäss Fig. 2 gemessen werden, in der die Spannung $U_4$ in Funktion der Verschiebung x aufgetragen ist. Die Information über die Position des beweglichen Teils 1 in bezug auf den festen Teil 2 ist dabei in einer Enveloppe E des Spannungssignals $U_4$ enthalten. Die in dieser Enveloppe E enthaltene Information kann beispielsweise aus der Amplitude des Erregersignals in bekannter Weise mit Hilfe eines Spannungsteilers erhalten werden.

In Fig. 3 ist eine weitere Ausführungsform der erfindungsgemässen Vorrichtung dargestellt. Bei dieser bevorzugten Ausführungsform sind drei Sensorspulen 11, 12 und 13 auf drei, ebenfalls von der Erregerspule 3 durchdrungenen U-förmigen Elementen 8, 9 und 10 vorgesehen. Durch die Einführung einer gegenüber der Ausführungsform gemäss Fig. 1 zusätzlichen Sensorspule 8 wird die Möglichkeit geschaffen, ein vorhandenes Nullsignal auf elegante Weise zu Kompensieren. Wird dem Signal der Sensorspule 9 die Phase 0° zugewiesen, so weisen die Signale der Sensorspulen 8 und 10 die Phasen 90° bzw. -90° auf. Durch Verbinden der einen Anschlüsse der Sensorspulen 8, 9 und 10 entsteht am andern Anschluss $U_{90}$ der Sensorspule 8 und am andern Anschluss $U_0$ der Sensorspule 9 ein um die Offsetspannung kompensiertes Signal bezogen auf den andern Anschluss $U_{-90}$ der dritten Sensorspule 10.

Das gewünschte Signal ergibt sich bei dieser Ausführungsform aus der Differenz zwischen den Spannungswerten $U_{90}$ und $U_{-90}$.

Die sich aus dem prinzipiellen Aufbau gemäss Fig. 1 und 3 ergebenden Ausführungsformen der erfindungsgemässen Vorrichtungen eignen sich sowohl für Distanz- bzw. Geschwindigkeitsmessungen von linearen, d.h. von im wesentlichen geradlinigen Bewegungen als auch für kreisförmige Bewegungen, einschliesslich solche auf Kreisbahnen. Die letztgenannte Anwendung schliesst auch die Verwendung der erfindungsgemässen Vorrichtung als Drehzahl- und/oder Winkelmessgerät ein.

Bei den letztgenannten Verwendungen ist der erste Teil 1 gemäss Fig. 1 vorzugsweise stationär, d.h. fest, und der zweite Teil 2 beweglich, mithin werden der erste Teil 1 Stator und der zweite Teil 2 Rotor genannt. Grundsätzlich gelten die Ausführungen zu den Fig. 1 bis 3 in entsprechender Weise, da lediglich die relative Geschwindigkeit bzw. Lage des ersten zum zweiten Teil 1, 2 von Bedeutung ist. Denkbar ist daher auch, dass sowohl der erste als auch der zweite Teil 1, 2 drehbar gelagert sind. Eine Anwendung der letztgenannten Ausführungsform ist beispielsweise bei einem Differential, bei dem die Ausgleichsbewegungen aufgezeichnet werden sollen.

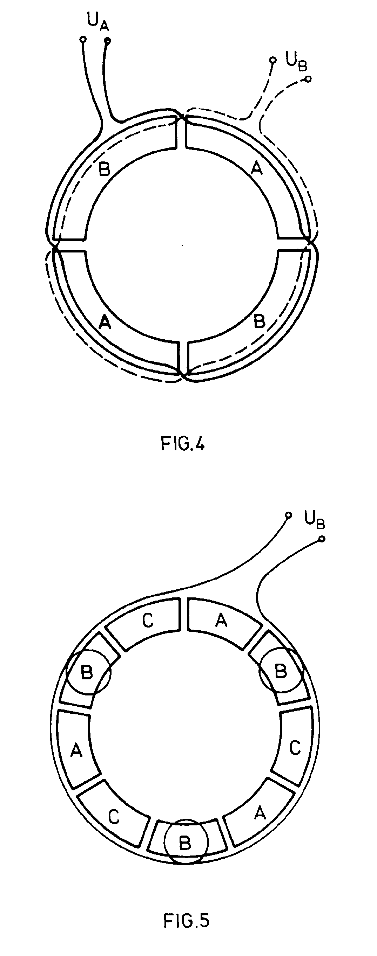

In Fig. 4 ist eine ringförmige Ausführungsform der erfindungsgemässen Vorrichtung gemäss dem in Fig. 1 gezeigten prinzipiellen Aufbau dargestellt. Für jede Sensorspule 6 und 7 gemäss Fig. 1 sind zwei Spulen in Serie geschaltet, wobei unter dem Begriff "Spule" auch bereits Leitungsanordnungen verstanden werden, bei denen eine Kopplung mit den U-förmigen Elementen A und B vorhanden ist, indem lediglich ein Leiter in ein U-förmiges Element aufgenommen wird. So wird gemäss Fig. 4 die Sensorspule A im Polsegment A innerhalb und im Bereich des Polsegmentes B ausserhalb des magnetischen Kreises geführt. Entsprechendes gilt für die Sensorspule B, von der eine Windung strichliniert dargestellt ist.

Im übrigen ist die Erregerspule 3 gemäss Fig. 1 in Fig. 4 nicht dargestellt. Bei ringförmigen erfindungsgemässen Vorrichtungen ist diese entsprechend den Ausführungen zu Fig. 1 als Ring vorhanden.

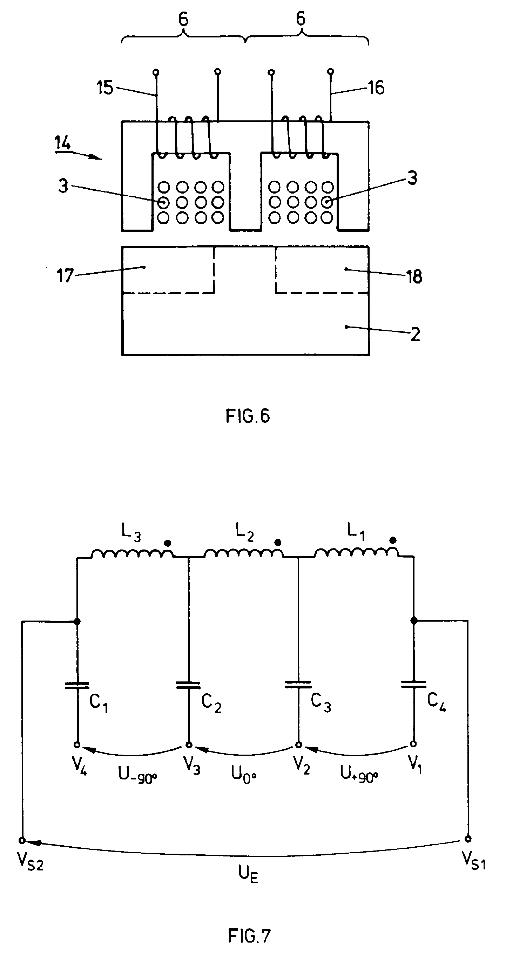

Fig. 5 zeigt eine Ausführungsform, bei der die erfindungsgemässe Vorrichtung nach dem in Fig. 3 dargestellten Prinzip aufgebaut ist, wobei - wie schon bei der Ausführungsform gemäss Fig. 4 - eine Sensorspule durch serielles zusammenschalten mehrere Spulen erhalten wird, die vorzugsweise gleichmässig über den Kreisring verteilt sind. In Fig. 5 sind die zu den gleichen Sensorspulen gehörenden Polabschnitte mit identischen Grossbuchstaben A, B oder C bezeichnet. Von den drei Sensorspulen 8, 9 oder 10 gemäss Fig. 3 ist lediglich eine, nämlich eine Sensorspule B schematisch dargestellt. Im Gegensatz zu der Spulenausführungsform gemäss Fig. 4 ist mit der Schlaufe bei den Polsegmenten angedeutet, dass die Spulen wie die Sensorspulen 4 und 5 bzw. 11, 12 und 13 gemäss Fig. 1 bzw. 3 um die U-förmigen Elemente 6 und 7 bzw. 8, 9 und 10 realisiert sind. Bei dieser Ausführungsform können zudem die Sensorspulen zur Reduktion der Streuinduktivität konvex/konkav - d.h. an die Rundung angepasst - gewickelt werden.

Die Ausführung der Sensorspulen gemäss Fig. 4 ist zwar konstruktiv äusserst einfach, jedoch weisen diese verglichen mit der Ausführung gemäss Fig. 5 eine höhere Streuinduktivität und einen grösseren ohmschen Widerstand auf.

Die Verteilung von mehreren Sensorteilspulen über den Kreisumfang gemäss Fig. 5 hat den wesentlichen Vorteil, dass sich den Sensorsignalen überlagerte Schwingungen, die aufgrund von Asymmetrien beispielsweise durch Fertigungstoleranzen entstehen, kompensieren. Dabei führen bereits kleinste Veränderungen des Luftspaltes zwischen beweglichem und festem Teil 1 und 2 (Fig. 1 und 3) zu erheblichen Signalanteilen, die sogar stärker sind als Signalanteile durch Veränderung der überlagerten Polflächen, aufgrund der die Position bzw. die Geschwindigkeit bestimmt wird. Luftspaltveränderungen, d.h. Polabstandsänderungen, entstehen nicht nur durch Fertigungstoleranzen der Sensorgeometrie sondern insbesondere auch durch Wärmedehnungen oder etwa durch Toleranzen im Lager des beweglichen Teils 2. Besonders die letztgenannten Toleranzen lassen Schwingungen zu, die sich entsprechend auf das Sensorsignal auswirken.

Durch die erfindungsgemässe Aufteilung einer Sensorspule auf mehrere in Serie geschaltete Spulen, die am Umfang des Sensorringes angeordnet sind, wird ermöglicht, ein durch eine asymmetrische Belastung hervorgerufener vergrösserter Luftspalt auf der einen Seite - und damit eine verkleinerte Reluktanz an dieser Stelle - mit einem verkleinerten Luftspalt auf der gegenüberliegenden Seite - und damit zu einer vergrösserten Reluktanz - zu kompensieren. Damit wird durch die vorgeschlagenen Anordnung der Sensorteilspulen ein durch eine Asymmetrie hervorgerufenes Störsignal in erster Näherung kompensiert. Eine Verbesserung des Kompensationsverhaltens kann dadurch erreicht werden, indem anstelle von drei Sensorteilspulen gemäss Fig. 5 eine weiterer Unterteilung der Sensorspule, beispielsweise in 6 oder 12 Teilspulen, vorgenommen wird.

Die Spulenanordnung gemäss Fig. 5 kann aber auch dazu verwendet werden, allfällig vorhandene Schwinginformationen des beispielsweise auf einer Welle montierten beweglichen Teils gezielt zu detektieren. Bei einer solchen Ausführungsform sind die Anschlüsse der Teilspulen nach aussen auf eine Subtraktionsschaltung geführt, in der die Weginformation eliminiert wird. Die herausgeführten Anschlüsse der Teilspulen können gleichzeitig zur Bestimmung der Weginformation in beschriebener Art und Weise zusammengeschaltet werden, womit Weg- und Schwingungsinformationen gleichzeitig vorliegen.

Die erfindungsgemässen Vorrichtungen eignen sich darüber hinaus vorzüglich zur Messung der Torsion einer Welle. Dabei werden zwei Sensorsysteme an den Enden der Welle befestigt. Die Differenz der beiden von den Sensorsystemen erhaltenen Signale wird in bekannter Weise zur Bestimmung des Drehmomentes verwendet.

Eine weitere Ausführungsform der erfindungsgemässen Vorrichtung besteht darin, dass zwei Sensorsysteme gemäss Fig. 4 oder 5 vorgesehen sind, wobei die beiden Systeme eine unterschiedliche Anzahl von Polen aufweisen. Damit ist es unter Auswertung der Phasenbeziehung zwischen den Systemen möglich, bei hoher Auflösung eine Umdrehung absolut zu kodieren. Das Verhältnis der Polzahlen wird beispielsweise mit n/(n-1) angegeben, wobei n ein ganze Zahl, zum Beispiel 8 oder 64, ist.

Fig. 6 zeigt in einem Schnitt senkrecht zur Erregerspule 3 eine eben beschriebene Ausführungsvariante mit zwei Sensorsystemen. Bei dieser Ausführungsform sind die U-förmigen Elemente 6 gemäss Fig. 1 zu einem E-förmigen Element 14 zusammengelegt, in dem sich einerseits die beiden Erregerspulen 3 und anderseits Sensorspulen 15 und 16 befinden. Entsprechend den eben beschriebenen, zum ersten Teil gehörenden Bestandteilen ist auch der zweite Teil 2 ausgebildet, der wiederum ein Trägerelement aufweist, auf dem Zähne 18 für das eine Teilsystem und Zähne 17 für das andere Teilsystem angeordnet sind. Die Anzahl der Zähne der Teilsysteme ist unterschiedlich und kann beispielsweise in einem der vorstehend genannten Verhältnisse gewählt werden.

Eine weitere Ausführungsvariante, mit der die absolute Position innerhalb einer Umdrehung bestimmt werden kann, besteht darin, dass ein Nullpunktsignal generiert wird. Dies hat auch den weiteren Vorteil, dass mit jeder Umdrehung allfällige Fehler bei der Datenübertragung erkannt werden können.

Zur Erzeugung des erwähnten Nullpunktsignals wird vorgeschlagen, dass der gezahnte zweite Teil eine Unregelmässigkeit aufweist, d.h., es fehlt ein Zahn. Zwei Sensorspulen, die im Zahnabstand angeordnet sind, erzeugen die gleiche Induktionssignale, solange sich die Sensorspulen im Bereich der regelmässig angeordneten Zähne des zweiten Teils bewegen. Werden die Signale der Sensorspulen voneinander subtrahiert, so ist des erhaltene Signal in diesem Bereich gleich null. Sobald sich jedoch die Zahnlücke bei den Sensorspulen befindet, wird ein Signal erzeugt, womit die Absolutposition bekannt ist.

Wie erwähnt wird die erfinderische Vorrichtung vorzugsweise mit einem Wechselstrom in der Erregerspule 3 (Fig. 1 und 3) erregt. Es ist jedoch auch denkbar, die Erregerspule 3 mit einem Gleichstrom zu erregen, womit bei Bewegung des beweglichen Teils 2 (Fig. 1 und 3) in den Sensorspulen Spannungen induziert werden, deren Amplituden proportional zum magnetische Fluss und zur Drehzahl ist und als Tachospannung verwendbar ist. Durch Auswerten mittels einer hierzu geeigneten und an sich dem Fachmann bekannten Elektronik werden Weginformationen ermittelt. Damit die Elektronik durch eine in Folge hoher Drehzahlen erhaltene hohe Tachospannung nicht zerstört wird, wird der Erregerstrom ab einer bestimmten Drehzahl zurückgenommen. Diese Methode der Signalerzeugung und Auswertung ist jedoch nicht für kleine Drehzahlen und für den Stillstand geeignet, da die Tachospannung dann gegen Null geht. Denkbar ist jedoch eine Kombination der Erregung mittels Wechselstrom für Stillstand oder kleine Drehzahlen und der Erregung mittels Gleichstrom für höhere Drehzahlen.

Wie erwähnt ist die Verwendung der Erfindung nicht allein auf kreisförmige Anordnungen eingeschränkt. Denkbar sind auch lineare Bewegung, wobei diesfalls vorzugsweise der zweite Teil ortsfest und der erste Teil verschiebbar gelagert ist.

Im Hinblick auf den Einsatz der erfindungsgemässen Vorrichtung bei Planetengetrieben wird weiter vorgeschlagen, sowohl einen Innenring als auch einen Aussenring vorzusehen, die mit als Zähne ausgebildeten Elementen gemäss dem zweiten Teil 2 (Fig. 1 und 3) auszustatten und die beide beweglich - d.h. drehbar - in bezug auf einen zwischen diesen Ringen angeordneten Sensorring sind. Der Sensorring ist dabei mit den Sensorspulen gemäss Fig. 1 bzw. 3 ausgestattet und fix montiert.

Der Vollständigkeit halber wird darauf hingewiesen, dass der passive zweite Teil 2 (Fig. 1 bzw. 3) auch als wellenförmiger Ring in der Art eines Toleranzringes ausgebildet sein kann.

In Fig. 7 ist eine weitere Ausführungsform der erfindungsgemässen Vorrichtung dargestellt, bei der die Sensor- und die Erregerspulen zusammen geschaltet sind. So sind drei Spulen $L_1$, $L_2$ und $L_3$ in bekannter Weise, d.h. gemäss Fig. 3 und der entsprechenden Beschreibung, zusammen geschaltet. An den Abgriffen an den Enden bzw. zwischen den in Serie geschalteten Spulen $L_1$, $L_2$ und $L_3$ werden die Potentiale $V_1$ bis $V_4$ abgegriffen, wobei mittels Kondensatoren $C_1$ bis $C_4$ eine spannungsmässige Entkopplung vorgenommen wird. Wird an den Enden der in Serie geschalteten Spulen $L_1$ bis $L_3$ die Erregerspannung $U_E = V_{S1} - V_{S2}$ angelegt, so können die entsprechenden Spannungen $U_{-90°}$, $U_{0°}$ und $U_{+90°}$ wie folgt bestimmt werden:

$$U_{+90°} = V_1 - V_2$$

$$U_{0°} = V_2 - V_3$$

$$U_{+90°} = V_3 - V_4$$

Bei dieser Ausführungsform sind lediglich vier Anschlussdrähte erforderlich.

**Patentansprüche**

1.  Vorrichtung zur Positions- und/oder Geschwindigkeitsbestimmung, bestehend aus einem ersten (1) und einem zweiten Teil (2), wobei die Teile (1, 2) relativ zueinander verschiebbar sind und wobei der erste Teil (1) mindestens eine Erregerspule (3) zur Erzeugung von magnetischem Fluss, der im wesentlichen in mindestens zwei Elementen (6, 7; 8, 9, 10) des ersten Teils (1) und zumindest teilweise und in Abhängigkeit der relativen Lage zwischen dem ersten und dem zweiten Teil (1, 2) über mindestens zwei Elemente (2a, 2b; 20, 21, 22) des zweiten Teils (2) geführt ist, und mindestens zwei Sensorspulen (4, 5; 11, 12, 13) aufweist, die je um mindestens ein Element (6; 7; 8; 9; 10) des ersten Teils (1) angeordnet sind, dadurch gekennzeichnet, dass die Elemente (6, 7; 8, 9, 10) des ersten Teils (1) derart in bezug auf die Elemente (2a, 2b; 20, 21, 22) des zweiten Teils (2) angeordnet sind, dass die Signale an den Sensorspulen (4, 5; 11, 12, 13) phasenverschoben sind, wobei der zweite Teil (2) symmetrisch in bezug auf eine senkrecht auf die Elemente (2a, 2b; 20, 21, 22) des zweiten Teils (2) stehende Ebene aufgebaut ist.

2.  Vorrichtung nach Anspruch 1, dadurch gekennzeichnet, dass der Absolutbetrag der Phasenverschiebung zwischen zwei Signalen der Sensorspulen (4, 5; 11, 12, 13) grösser als 0° und kleiner als 180°, vorzugsweise 90° ist.

3.  Vorrichtung nach Anspruch 1 oder 2, dadurch gekennzeichnet, dass die Elemente (6, 7; 8, 9, 10) des ersten Teils (1) U-förmig ausgebildet sind.

4.  Vorrichtung nach einem der vorangehenden Ansprüche, dadurch gekennzeichnet, dass zwei Sensorspulen (4, 5) vorgesehen sind, wobei der Absolutbetrag der Phasenverschiebung zwischen den Signalen der Sensorspulen (4, 5) 90° beträgt.

5.  Vorrichtung nach einem der Ansprüche 1 bis 3, dadurch gekennzeichnet, dass drei Sensorspulen (11, 12, 13) vorgesehen sind, wobei bei Zuweisung der Phase 0° an das Ausgangssignal einer ersten Sensorspule (12) die Phasenverschiebung des Ausgangssignals der zweiten Sensorspule (11) 90° und die Phasenverschiebung des Ausgangssignals der dritten Sensorspule (13) -90° in bezug auf das Ausgangssignal der ersten Sensorspule (12) betragen.

6. Vorrichtung nach einem der vorangehenden Ansprüche, dadurch gekennzeichnet, dass der erste und der zweite Teil (1, 2) kreisförmig ausgebildet sind.

7. Vorrichtung nach Anspruch 6, dadurch gekennzeichnet, dass die Elemente (6, 7; 8, 9, 10) des ersten Teils (1) im wesentlichen gleichmässig über dessen Umfang verteilt sind.

8. Vorrichtung nach Anspruch 6 oder 7, dadurch gekennzeichnet, dass die Elemente (2a, 2b; 20, 21, 22) des zweiten Teils (2) gleichmässig über dessen Umfang verteilt sind.

9. Vorrichtung nach Anspruch 6 oder 7, dadurch gekennzeichnet, dass die Elemente (2a, 2b; 20, 21, 22) des zweiten Teils (2) bis auf ein fehlendes Element, wodurch eine Lücke gebildet ist, gleichmässig über dessen Umfang verteilt sind.

10. Vorrichtung nach einem der Ansprüche 6 bis 9, dadurch gekennzeichnet, dass mindestens eine Sensorspule (6, 7; 11, 12, 13) in mehrere Teilspulen (A, B; A, B, C) aufgeteilt ist.

11. Vorrichtung nach einem der vorangehenden Ansprüche, dadurch gekennzeichnet, dass die Erregerspule (3) mit einem Wechsel- oder einem Gleichstrom beaufschlagt ist.

12. Vorrichtung nach einem der vorangehenden Ansprüche, dadurch gekennzeichnet, dass der erste Teil (1) verschiebbar gelagert und der zweite Teil (2) ortsfest ist.

13. Vorrichtung nach einem der Ansprüche 1 bis 11, dadurch gekennzeichnet, dass der erste Teil (1) ortsfest und der zweite Teil (2) drehbar gelagert ist.

14. Verwendung der Vorrichtung nach einem der Ansprüche 6 bis 13, wobei die Erregerspule (3) bis zu einer vorgebbaren Drehzahl mit Wechselstrom und über dieser Drehzahl mit Gleichstrom erregt wird.

15. Verwendung nach Anspruch 14, dadurch gekennzeichnet, dass bei Überschreiten einer kritischen Drehzahl, die über der vorgebbaren Drehzahl liegt, der Erregerstrom proportional zur Differenz zwischen momentaner Drehzahl und kritischer Drehzahl reduziert wird.

16. Verwendung von zwei Vorrichtungen nach einem der Ansprüche 6 bis 13 zur Messung einer Torsion oder eines Drehmomentes.

17. Verwendung von zwei Vorrichtungen nach einem der Ansprüche 6 bis 13 zur absoluten Ortsbestimmung, wobei Elemente (14) des ersten Teils (1) E-förmig zur Aufnahme von zwei Erregerspulen (3) ausgebildet sind und wobei die Anzahl der Elemente (17, 18) der zweiten Teile (2) unterschiedlich sind.

FIG.1

FIG.2

FIG.3

FIG. 4

FIG. 5

FIG.6

FIG.7

**Europäisches Patentamt**

## EUROPÄISCHER RECHERCHENBERICHT

Nummer der Anmeldung

EP 99 10 9417

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 528 199 A (MEHNERT WALTER DR) 24. Februar 1993 (1993-02-24) * Seite 15, Zeile 29 - Seite 17, Zeile 12; Abbildungen 10,11 * --- | 1,3,11, 12 | G01P3/488 G01D5/20 G01D5/22 |
| A | DE 12 17 085 B (SIEMENS) 18. Mai 1966 (1966-05-18) * Seite 1, Zeile 48 - Seite 4, Zeile 20; Abbildungen * --- | 1 | |
| A | EP 0 664 441 A (MEHNERT WALTER DR) 26. Juli 1995 (1995-07-26) * Spalte 23, Zeile 31 - Spalte 28, Zeile 34; Abbildungen 5-7 * ----- | 1 | |

| | | | RECHERCHIERTE SACHGEBIETE (Int.Cl.7) |
|---|---|---|---|
| | | | G01P G01D |

Der vorliegende Recherchenbericht wurde für alle Patentansprüche erstellt

| Recherchenort | Abschlußdatum der Recherche | Prüfer |
|---|---|---|
| DEN HAAG | 27. September 1999 | Pflugfelder, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**   EP 99 10 9417

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-09-1999

| Im Recherchenbericht angeführtes Patentdokument | | Datum der Veröffentlichung | Mitglied(er) der Patentfamilie | | Datum der Veröffentlichung |
|---|---|---|---|---|---|
| EP 0528199 | A | 24-02-1993 | DE | 4127209 A | 18-02-1993 |
| | | | AT | 137013 T | 15-05-1996 |
| | | | CA | 2076222 A | 17-02-1993 |
| | | | DE | 59206004 D | 23-05-1996 |
| | | | ES | 2087359 T | 16-07-1996 |
| | | | US | 5475302 A | 12-12-1995 |
| DE 1217085 | B | | KEINE | | |
| EP 0664441 | A | 26-07-1995 | DE | 4113745 A | 29-10-1992 |
| | | | AT | 146275 T | 15-12-1996 |
| | | | CA | 2067076 A | 27-10-1992 |
| | | | DE | 59207646 D | 23-01-1997 |
| | | | EP | 0510367 A | 28-10-1992 |
| | | | ES | 2098386 T | 01-05-1997 |
| | | | JP | 6207833 A | 26-07-1994 |
| | | | US | 5323109 A | 21-06-1994 |

EPO FORM P0461

Für nähere Einzelheiten zu diesem Anhang : siehe Amtsblatt des Europäischen Patentamts, Nr.12/82